# EUROPEAN PATENT APPLICATION

(11) **EP 4 400 698 A2**
(43) Date of publication of application: **17.07.2024**
(21) Application number: 23020375.4
(22) Date of filing: 11.08.2023
(51) Int. Cl.: F02C 1/00

(54) **ELECTRIC POWER GENERATOR, WITH NON-POLLUTION EMISSIONS, WITH GENERATION OF PURE OXYGEN, DRINKING WATER AND FREE NITROGEN AS BY-PRODUCTS**

(30) Priority: 08.09.2022 AR P220102443
(71) Applicant: Iglesias Schoo, Raúl Alberto, 1636 - Buneos Aires Olivos (AR)
(72) Inventor: Iglesias Schoo, Raúl Alberto, 1636 - Buneos Aires Olivos (AR)
(74) Representative: Ruo, Alessandro

(57) **Abstract**

The operation of the novel device begins in an extreme pressure electrolyser, in which the water molecule is split into its two constituent components, hydrogen and oxygen.

Hidrogen at extreme pressure and at the exit temperature of the electrolysis evolves, delivering useful work in hydrogen expansion turbines in several stages in series, with alternating enthalpy increases, due to het gain in conveniently arranged exchangers.

Hydrogen expansion turbines are mechanically coupled to the electric generator.

Oxigen at extreme pressure and temperature at the outlet of the electrolyser evolves, delivering usefull work in oxygen expansion turbines in several stages in seies, with alternating enthalpy increases, due to heart gainin convenient arranged exchangers.

Oxygen at a commercial pressure, which can be 150 BAR, is distributed in cylkinders suitable for transport, distribution and commercialization as a medical oxygen, as oxygen for flame cutting, for oxyacetylene welding or other use in various chemical processes.

The hydrogen is channeled to the fuel cell to react with the oxygen in the air, supplied to the fuel cell to produce electrical energy directly, and heat that will be used in the newly invented device.

The fuel cell effluents are water vapor, which will be condensed and transformed into potable water after leaving the fuel cell effluent receiver in the treatment unit, and nitrogen from the air entering the fuel cell, which did not undergo any chemical reaction, is delivered for the syntesis of ammonia or various nitro compounds such as fertilizers and explosives.

This innovative device has the very original an exclusive advantage of obtaining a significant flow of energy, absorbing heat from the atmosphere after the numerous expansions of the gases involved and the use of the fuel cell that in a more harmonious way convert the reaction of hydrogen and oxygen into electricity, inside the cell a way that is more like a reversible reaction that conventional combustion, even though it is not.

## Description

The present invention of a **Electric power generator, with non-polluting emissions, with the generation of pure oxigen, drinking water and free nitrogen as by-products,** obeys the urgent need to continue enjoying the benefits provided by the use of energy, without increasing the deterioration of the environment, or contaminating the planet, with harmful substances and greenhouse effect.

Additionally, the operatión of the new device generates pure oxigen as a by-product that can be used as medicinal oxigen or as industrial oxigen for various uses, drinking water and free nitrogen, which can be used for the syntesis of ammonia or other nitrogenous susbstances.

### STATE OF THE ART AND THE PROBLEM TO BE SOLVED

The generation of electrical energy that was used in the pioneering and avanced countries , was the use of waterfalls of a river, with the construction of dams, containing rotating hydraulic turbines, coupled to electrical generation machines, which based on the power of the rotation of the hydraulic turbine, transforms this mechanical energy into electrical energy for its distribution and use to this day.

With the widespread use of coal, it was possible to build the first thermal generaton plats, highly polluting and with high emissions of toxic and greenhouse gases. This type of coal-fired power plant consists of a large boiler in which the combustion of coal is produced, generating heat that is transferred to a mass of water that, with the increase in its enthalpy, is transformed into high-pressure steam, which is forced to evolve inside a steam turbine, thus delivering its energy to a generator, which transforms the mechanical energy supplied by the steam turbine into electrical energy for distribution.

Simultaneously, the aplication of the coal-fired steam engine made it possible to operate boats of all kinds and made them independent of the need for vavorable winds to make sea crossings, fron there, with accurate estimates of travel times, and with large emissions of polluting gases.

With the development of the oil industry and liquid hydrocarbons, liquid fuel thermoelectric plants began to be installed, also a source of toxic gases, greenhouse gases and operating similar to coal plants.

The excellent convenience of liquid fuels allowed the vertiginous development of the automotive industry and land transport of people and goods, but at the cost of the enormous generation of toxic gases and greenhouse gases.

With the development of long and large gas pipelines, natural gas thermoelectric power plants were development, somewhat less polluting than all previous thermal sources, but they were also large generators of greenhouse gases.

With advances in technology, combined cycle power plants were created, increasing their thermal output and with a specific reduction in the generation of greenhouse gases, but also pollutants due the production of carbon dioxide in large quantities.

It is worth mentioning the creation of nuclear power plants, which although they do not generate greenhouse, are potentially a source of catastrophic enviromental tragedies, with magnitudes that are difficult to calculate, keep in mind the examples of Chernobyl and Fukushima.

An the degree of deterioration of our planet, due to the effect of climate change, due to the use of fossil fuels, has reached dimensions of global tragedy with the beginning of mass extinctions of life on the planet and the unwanted increase in sea levels.

Due to this, there are many clean alternative energy generation developments, as will list in these paragraphs.

Wind energy, the use of wind energy is very old, its use for grain milling is documented as very successful and in the particular case of the Netherlands, which in the year 1900 already had a matrix for the use of energy in windmills of 10 % of the total country, and these windmills were used massivelly, to drain the seawater from the North Sea of the poulder in order to conquer mainland that was scarce for them.

But wind energy has a great disadvantage and that is the wind intensity responds to the Weibull statistical distribution and there are high percentajes of very light winds that do not allow the use of the machines and other lower percentajes with winds of such high intensity that they force the wind generators to be flagged to protect their integrity.

Solar energy is also a multi-utility resource that is spreading very rapidly due to the decrease in the cost of photovoltaic panels.

There are also direct uses for heating fluids through the use of large mirrored surfeces that concentrate the energy of the sun rays to achieve an increase in their efficiency.

But solar energy has the serious drawback that only a few hours of the day are usable, as long as there is no storm, rain or thick clouds.

There are also other sources such as tidal energy, geotermical energy or wave energy, but they are not relevant because they are uneconomical and impractical.

### OBJECT OF THE INVENTION

In order to solve the very serious problem posed, we must remember a very old prophecy, which says: "I believe that one day water will be used as fuel, that de oxygen and hydrogen that constitute it, used separately and simultaneously, will produce an inexhaustible source of light and heat", professed by Jules Verne in 1,874.

The primary object of this invention is to achieve the materialization of a device capable of using water from any so
urce, an superabundant resource, lacking high costs of obtaining it, a safe element that is not harmful to health of animals or plants, to generate electricity, without generating harmful effluents, or greenhouse effect, since it does not resort to the combustion of hidrocarbons but to the intelligent treatment of water.

As secondary benefit derived from this device, there is de emission, as a by-product, of high-pressure oxigen, easyly available for packaging and marketing in pressurized cilinders.

As a third derived benefit, it is obtaining drinking water suitable suitable for human consumption, given that the only thing this device requires is that the water entering the equipment be conveniently filtered and can be seawater or wastewater contaminated with harmul bacteria for healt, the benefit is extraordinary.

As a fourth derived benefit, the device provides free nitrogen as an aditional emission, wich can be used directly after removing traces of moisture for the chemical syntesis of ammonia or various nitrogenous compounds.

The electrical energy thus obtained can be generated in homes or in industries, it cab be generated in boats and in terrestrial automotive means, having only the need to suply filtered water of any condition for the device to operate, with the exception of the case of the boats that can be supplied from the environment in which they move, which is very convenient, by the way.

The architecture of the new device will allow a change of paradigm and the large generating plants will become obsolete, and that exist in each entity, be it at home, an industry, a motor vehicle or a boat, or a spacecraft, being replaced by a piece of equipment individual that suplies the energy needs in a particular way, regardless of the distribution networks.

Also in some cases, these existing distribution networks can be used to interconnect with the system, making each device a generation node that operates in coordination in order to achieve greater reliability than the entire interconnected system, eliminating the need for transformer stations and kilometers of very hight voltage transmission lines.

### PHYSICAL PRINCIPLE OF OPERATION

When we analyze the procedure of electrolysis of water, remembering Faraday's Law we have that:
1) The amount of chemical reaction that occurs at each electrode is directly proportional to the total amount of electricity that has passed through the solution.
2) The umber of equivalents of the reaction that takes place at the cathode is exactly equal to the number of equivalents of reaction at the anode ( this is easily understood from our knowledge of electricity: for each electron that enters the solution at the cathode must leave an equal number from the anode to complete the circuit ).
3) The process of electrolysis of water, consisting of its dissociation into its chemical components, hydrogen and oxigen, is an exclusively electronic phenomenon and on an atomic scale and is independent of the pressure at which we carry out the reaction.

Although the third term was not explicity mentioned by Faraday, in his statement of the Law, it is very simple and practical to deduce it due to the intrinsec nature of the electronic reaction.

And it is very understandable that Faraday, at that time, was only focused and concentrated on the study of electrical and electronic reactions, which were the predominant mystery in this historical stage of scientific progress in the year 1,834, completely ignoring the funfamental importance of one of them, the present factors, which is the pressure of the reaction, which today allows us to materialize the present invention of the novel device electricity generator, high pressure pure oxigen, potable water and nitrogen for synthesis use.

The later should not be taken as a criticism of one of humanity's greatest scientists, just knowing his life, his carrer, gives us a sample of his overwhelming intelectual level, an enormous stubbornness, empathy and perseverance in discovering the secrets of nature, despite not having received academic training, simply the analysis of this factor, which is the pressure at which the task is carried out, was not within their study objective.

Therefore, our novel device of a container subjected to very high pressure, inside which is the electolyser itself with its two main elements, the anode and the cathode, which allow the dissociation of water molecules into hidrogen gas and oxigen gas.

It is necesary to clarify that within the electrolyser, the presence of a selected conductive substance that acts as a catalist is necesary to facilitate the intended dissociation of water into hydrogen gas and oxygen gas as the desired objetive.

We must aldo provide an automatic purge system for saturated waters that already hinder the desires reaction and this purge system is the one that allows the increase of fresh susbstance appropiate for the reaction.

And when we refer to very extremely high pressure inside the electrolyser, we are referring of ten thousand BAR, or possibly higher, because for a liquid like water, in practical and effectively incompressible terms, being subjected to these high pressures, it does not affect its thermodynamic properties, under approprite selected temperature conditions, but by giving the impression of current to the electrolyser, both gaseous hydrogen and gaseous oxygen will sprout at that very hight pressure ( and other different phenomenon is physically impossible ) with the increase in its temperature due to the phenomenon of electrolysis that involves a current flow and because of the irreversibilities of all processes.

And from the thermodynamic point of view both gases, at this high pressure and temperature, have a much increased enthalpy, which allows them to carry out enormous amounts of work in their evolution, using expansion turbines staggered in series, with use of useful energy to the extreme, of the shafts of the turbines used.

It is appropiate to explain that each of the hydrogen expansion turbines will be appropriately designed so that the outlet temperature of each turbine is much lower than ambient temperature, so that, in first stage exchangers, the gases increase their temperature, and atmospheric heat, achieving a very convenient atmospheric cooling effect, to later receive more caloric and enthalpic input from heat exchangers, which represent 35 % of the energy received by the cell.

Here we open a parenthesis to mention that oxygen can be withdrawn as a pure gas at 150 BAR, which is a characteristic pressure for commercial use, and for industrial use of flame cutting, oxyacelylene welding or for various chemical reactions.

This oxygen is already withdrawn from the equipment as a by-product of high economic value because, as will be conveniently explained in the following steps, we are going to use equivalent oxygen molecules but that will be at zero cost, since they are components of the air we breathe, very abundant and available in anywere.

And it is not necesary to explain that the essential element for the operation of any fuel cell is hydrogen and atmospheric air is always used to achieve the oxydizing chemical reaction that generates electrical energy.

Now, we have already extracted significant amounts of energy from the almost total expansion of hydrogen and from the partial expansion of oxygen, so we have hydrogen that we will use for the generation of electrical energy, in a hydrogen fuel cell, which complements the electrolyser and the turbines, the whole set generates electricity.
1) A fuel cell has a performance in order of 55 % of the energy of the hydrogen entered and that reacts with the free oxygen in the air.
2) The heat generated by the fuel cell in its operation is of the order of 35 % of the energy of the hydrogen entered to react in the fuel cell, that heat will be delivered to the hydrogen and oxygen, inside the receiving container for hydrogen emissions. The fuel cell, by way of superheating after leaving the atmospheric heat exchangers located at the oulet of the hydrogen and oxygen expansion turbines in such a way that it increases the enthalpy of both gases and consequently increases the capacity to carry out expansion work, in the electrolyser output turbines, so that they increase electricity production and simultaneously, the water vapor is condensed, which comes out as an emission from the fuel cell to be able to be removed from the container, in order to be treated with micronutrients and minerals that transform distilled water into drinking water.

In these terms we have described the operating principle of this innovative generator of electrical energy, pure oxigen, drinking water and free nitrogen.

Its is really important and essential to highlight that, since it is not a piece of equipment that obtains energy from combustion in a closed thermodynamic cicle, then the insurmountable ceiling imposed by the thermodynamic performance of Carnot cycle is not applicable and we have no limit on the performance and potential of our new device.

It is also peremptory to mention that the emissions from the complete equipment are pure oxygen, drinking water and free nitrogen, the later is entered into the cell by the surrounding air and remains available after the process for any type of chemical synthesis of ammonia or the synthesis of some nitro compound.

No toxic gases or greenhouse gases are generated and a cooling effect is caused in the device's surroundings, due to the strong expansion of the working gases.

The supply water can be seawater, or wastewater with the only condition that it be properly filtered, likewise the electrolyser will have a mechanism that allows recirculation and discarding of a part of the water to be treated, in order to avoid an inconvenient concentration of elements unwanted that hinder the process of electrolysis.

For each type of water to be treated, the electrolyser must be carefully designed and with specific catalist elements, for the types of water to be electrolysed.

The equipment must have a multi-stage pump to achieve the very high operating pressures in the electrolyser, the higher the design pressure, the greater the production of electrical energy.

From the sum of the electrical energy produced by the fuel cell and the electrical energy obtained from the hydrogen and oxygen expansion turbines, the energy used in the electrolyser and in pumping water to feed it must be subtracted, the surplus it will be the production of clean electrical energy from the new invented equipment plus the production of oxygen plus of drinking water and finally the production of free nitrogen.

Making an analogy with a conventional thermal power plant and in order to easy create a mental image of the process used, let's make the parallelism with a condensate pump system, boiler tubes, superheat tubes, steam turbine and electric power generator.

In a steam thermal plant, the power of the condensate pump is negligible, compared to the power of the steam turbine that drives the rotary generator, due to the increase in enthalpy that the steam receives in the tubes due to the combustion in the boiler.

In this innovative device it is equivalent, the multi-stage pumping system, with the condensate pump, which feeds the boiler, ther electrolyser resembles the dome of the boiler, in which the condensed water is vaporized and the expansion turbines of hydrogen and oxigen produce work just like steam turbines in power plants.

The fuel cell gives us a supply of additional electrical energy of 55 % of that entered by the hydrogen to react.

### OPERATION OF THIS INVENTION AND FIGURE

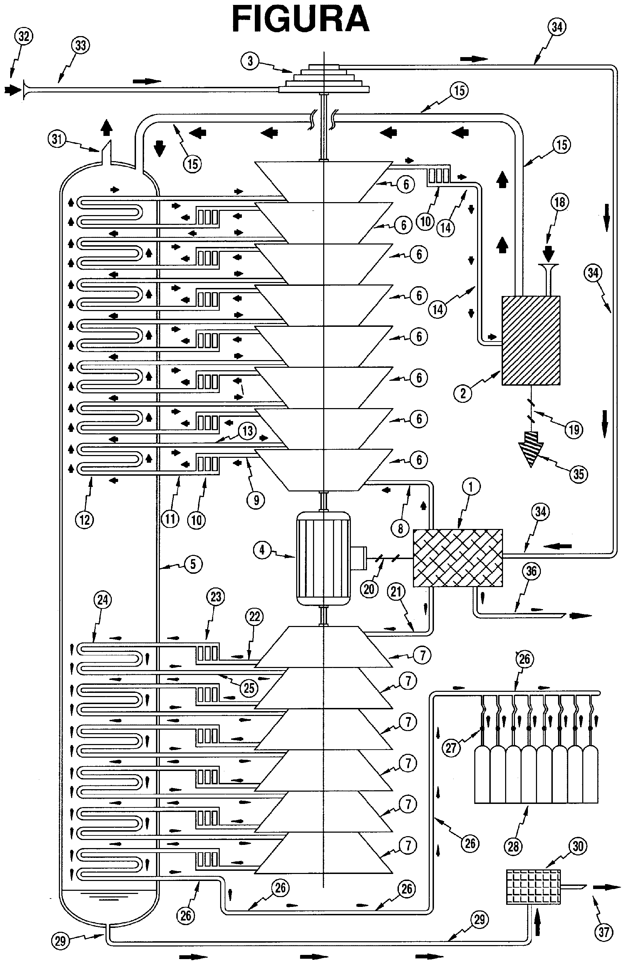

The figure indicates as 1 the very high pressure electrolyser that is filled with water and also contains an electrolyte substance that facilitates and favors the dissociation of the chemical elements that make up the working water and an automatic purging system for substances that they do not favor the electrolysis reaction.

Its indicated as 2 the fuel cell that by receiving hydrogen and with the contribution of oxygen from the air produces electrical energy and the heat originated in the reaction.

The electrolyser feed water pump is indicated as 3, an extremely high-pressure multistage pump.

The electric power generator is indicated as 4, which is operated by the multiplicity of coupled turbines, where the hydrogen at high pressure and the oxygen at high pressure, which are produced in the electrolyser, are expanded in stages.

The recipient of the emissions produced by the fuel cell, made up of water vapor and nitrogen, is indicated as 5, the recipient is a container for low-temperature hydrogen and oxygen radiators, which cause the condensation of the water emited by the cell of fuel that is derived to a unit that supplies the micronutrients and minerals necessary to make the distilled water drinkable and give it better properties.

One of the multiple expansion turbines in which the extreme pressure hydrogen successively delivers power in stages is indicated as 6, with the consequent decrease in its enthalpyin the successive turbines, which are mechanically coupled to motivate the activation of the electric generator.

Indicated as 7 is one of the multiple expansion turbines in which the extreme pressure oxygen is successively delivering power in stages, with the consequent decrease in its enthalpy in the successive turbines that are mechanically coupled to motivate the drive of the electric generator.

Indicated as 8, is the extreme pressure hydrogen outlet conduit from the electrolyser, which feeds the first hydrogen expansion turbine.

Indicated as 9, is the outlet conduit from the hydrogen expansion turbine to a radiator that captures heat from atmospheric air in order to increase the enthaply of hydrogen, in order to be more productive in the following expansion turbine.

Its indicated as 10, one of the atmospheric heat exchangers of the hydrogen, which is downstream of the outlet of the expansion turbine, therefore this hydrogen, which is downstream of the outlet of the expansion turbine, therefore this hydrogen is at extremely low temperatures due to the powerful expansion with work delivery of hydrogen.

In this way, a significant amount of heat is captured in this exchanger, which produces an atmospheric cooling effect and an increase in the enthalpy of hydrogen, which provides power for the interaction with the following turbine. This consecuence can be used to provide cooled air for comfort in buildings in summer periods or to provide cold to refrigeration facilities.

Indicated as 11 is the outlet conduit of the atmospheric hydrogen heat exchanger, which channels the flow of hydrogen to the secondary hydrogen heat exchanger, which is located within the emissions receiving vessel of the fuel cell.

Indicated as 12, is the secondary hydrogen heat exchanger, contained in the receiver container for fuel cell emissions, whose mission is to help ensure that the water vapor that constitutes part of the output emission from the fuel cell is fully condense, with the additional benefit that the hydrogen adds enthalpy for the subsequent expansion.

The inlet conduit to the next hydrogen expansion turbine is indicated as 13.

The hydrogen feed conduit for entering the fuel cell is indicated as 14.

The emission conduit for entering the fuel cell is indicated as 15, consisting of water vapor resulting from the reaction, which we could call reverse electrolysis, and nitrogen from the atmospheric air that enters the fuel cell to activate the reaction that will provide electrical energy and heat, this conduit channels these emissions to the receiving container where the reactant water will condense.

Indicated as 18, is the filtered atmospheric air inlet nozzle that provides the oxygen necessary for the reaction in the fuel cell.

The electric power output busway of the fuel cell is indicated as 19.

Indicated as 20, is the electrical energy outlet conduit generated in the generator, powered by the hydrogen turbines that feed the electrolyser.

The very high pressure oxygen outlet conduit of the electrolyser is indicated as 21.

The outlet conduit of a turbine in which oxigen expands is indicated as 22, providing work to drive the electric generator.

It is indicated as 23, the atmospheric heat exchanger that provides heat from the environment to the oxygen that leaves one of the oxygen turbines at extremely low temperature after its expansion with delivery of work in an oxygen turbine, this cooling effect can also be used for refrigeration of buildings in summer periods or as industrial refrigeration for cold rooms.

A secondary oxygen radiator is indicated as 24, in which the oxygen gains temperature and increases its enthalpy and simultaneously helps to condense the output water from the hydrogen cell.

The conduit that carries oxygen expansion turbine is indicated as 25.

The high-pressure oxygen distributor conduit for filling containers is indicated as 26, in order to be able to market the already fractionated product.

The cilinders for the storage and distibutiom of high pressure oxygen are indicated as 28.

The condensed water conduit in the fuel cell emissions receptor is indicated as 29, which feeds the water inlet to the treatment unit with micronutrients and minerals in order to convert the distilled water into drinking water for human use.

It is indicated as 30 to the water treatment unit with micronutrients and minerals in order to obtain drinking water for human use.

The outlet conduit for the free nitrogen emited as effluent by the fuel cell is indicated as 31, a component of the air that had entered it and that did not chemically interact in this invented device and is available to the chemical industry for ammonia syntesis or nitrogenous components.

The filtered water entering the novel device is indicated as 32.

The water supply pipe to the extreme pressure pump is indicated as 33.

The water conduit from the extreme pressure pump outlet and from the electrolyser inlet is indicated as 34.

The electrical power output connector of the fuel cell is indicated as 35.

The fluid outlet conduit purged from the electrolyser is indicated as 36.

The drinking water outlet conduit for human consumption, irrigation and other uses is indicated as 37.

For greater abundance, the operation of the new device begins in an extreme pressure electrolyser, in which the water molecule is split into its constituent components, hydrogen and the other, oxygen.

Hydrogen at extreme pressure and at the exit temperature of the electrolyser evolves, delivering useful work in hydrogen expansion turbines in several stages with alternating enthalpy increases due to heat gain in conveniently arranged exchangers.

Hydrogen expansion turbines are mechanically coupled to the electric generator.

Oxygen at extreme pressure and temperature at the outlet of the electrolyser evolves, delivering useful work in oxygen expansion turbines in several stages, with alternating enthalpy increases, due to heat gain in conveniently arranged exchangers.

Oxygen at a commercial pressure, which can be 150 BAR, is distributed in cylinders suitable for transportation, distribution and commercialization as medicinal oxygen, as oxygen for flame cutting, for oxyacetylene welding or other use in various chemical processes.

The hydrogen is channeled towards the fuel cell, so that it reacts with the oxygen in the air supplied to the cell to produce electrical energy directly and heat, which will be used in the novel invented device.

The fuel cell effluents are water vapor, which be condensed and transformed into drinking water after leaving the fuel cell effluent receiver in the units of treatment, and nitrogen from the air that entered the fuel cell, the same that was not the objet of any chemical reaction, is delivery for the syntesis of ammonia or various nitro compounds such as fertilizers or explosives.

This innovative device has the very original and exclusive advantage of obtaining a significant flow of energy, absorbing heat from the atmosphere after the numerous expansions of the gases involved and the use of the fuel cell that converts the reaction in a more harmonious way of hydrogen and oxygen into electricity, inside the cell in a way that is more like a reversible reaction than conventional combustion, although it is not really and we could almost refer to it as reverse electrolysis, although the process itself is not it is, because in both processes there is heat generation.

### COMMENT

Although Michael Faraday in 1.834 managed to invent electrolysis, while Christian Friedrich Schonbein together with Sir William Grove published their research on the fuel cell in 1.843, and Jules Verne enunciated his famous prophecy in 1.874, almos a century and a half have passed and until the conception of this marvelous device invented in ours days, we had not been able to combine common elements, in such a way as to make magnificent use of the monstrous talent of these creators.

Perhaps the conceptualization of the similarity of the fuel cell with a common electric battery has worked as a fence that prevented scientific progress, when in reality the interrelationship between an electrolyser and the cell is much more familiar, since if irreversibilities did not exist with heat dissipation, they would be almost reversal equipment.

THE FOLLOWING FOLLOWS FOUR CLAIMS

## Claims

**1.** An ELECTRIC POWER GENERATOR, WITH NON-POLLUTION EMISSIONS, WITH GENERATION OF PURE OXYGEN, DRINKING WATER AND FREE NITROGEN AS BY-PRODUCTS that includes two series of expansion turbines, a series powered by very high-pressure gaseous hydrogen coupled between them and a an electric power generator, CHARACTERIZED BECAUSE: Hydrogen and oxygen are generated by electrolysis, in an electrolyser that operates at very high pressure, the hydrogen obtained in entered, after the evolutions in the turbines so thast in combination with atmosphetic air, produce usefulelectric energy, causing the condensation of the water vapor produced in the fuel cell to be able to convert that distilled water into drinking water by adding micronutrients and minerals, while the oxygen produced in the electrolyser, after interacting in oxygen expansion turbines and heat exchangers is directed to a carousel for filling high-pressure cylinders, suitable for distribution and marketing of already fractionated oxygen, while the condensed water from the fuel cell emissions is treated in equipment that adds micronutrients and minerals to make the distilled water potable out of the fuel cell, while the brackish or pulluted water entering after an effective filtered process is pumped by a multi-stage extreme pressure pump, preferably positive displacement, in order to feed back the electrolyser.

**2.** An ELECTRIC POWER GENERATOR, WITH NON-POLLUTING EMISSIONS, WITH GENERATION OF PURE OXYGEN, DRINKING WATER AND FREE NITROGEN AS BY-PRODUCTS according to the first claim, CHARACTERIZED BECAUSE: extreme pressure hydrogen, after evolving in the series of hydrogen turbines and heat exchangers, enters the hydrogen cell for the purpose of chemically reacting with the oxygen in the air, which enters the fuel cell to generate useful electrical energy, which added to the electrical energy of the generator coupled to the two series of turbines constitute the total electrical energy produced by the device, acting in this way, the fuel cell as an efficient distiller of the constituent components of the air.

**3.** An ELECTRIC POWER GENERATOR, WITH NON-POLLUTING EMISSIONS, WITH GENERATION OF PURE OXYGEN, DRINKING WATER AND FREE NITROGEN AS BY-PRODUCT according to the first claim, CHARACTERIZED BECAUSE: The emissions from the fuel cell are redirected to a container inside which is a multiplicity of secondary heat exchangers that absorb the heat output from the hidrogen cell and the latent heat of condensation of the water emitted by the cell, in order to achieve the effective drying of the nitrogen that the cell emits after the corresponding chemical reaction, this nitrogen is emitted by the device in optimal conditions to be used in chemical syntesis with other elements, that is to say that the device in its operation acts as an effective distiller of the natural components of the air, giving us the benefit of having generated a gas of high economic value and that in its natural mixture in the atmosphere, it does not posses by itself the capacity to be incorporated into the soil or to fertilize it, that is to say in its natural condition has no economic value.

**4.** An ELECTRIC POWER GENERATOR, WITH NON-POLLUTING EMISSIONS, WITH GENERATION OF PURE OXYGEN, DRINKING WATER AND FREE NITROGEN AS BY-PRODUCT according to the first claim, CHARACTERIZED BECAUSE: Oxygen, after leaving the extreme pressure electrolyser and after evolving delivering work in a series of oxygen expansion turbines and going through a multiplicity of heat exchangers that infer an enthalpy gowth, it is redirected to a commercial working pressure, to a carousel for filling high-pressure cylinders for its distribution and commercialization, while the electrolyser will have a water purge device that, due to its state, interferes with the process of electrolysis of the extreme pressure electrolyser.

**1.** An ELECTRIC POWER GENERATOR, WITH NON-POLLUTION EMISSIONS, WITH GENERATION OF PURE OXYGEN, DRINKING WATER AND FREE NITROGEN AS BY-PRODUCTS that includes two series of expansion turbines, a series powered by very high-pressure gaseous hydrogen coupled between them and a an electric power generator, CHARACTERIZED BECAUSE: Hydrogen and oxygen are generated by electrolysis, in an electrolyser that operates at very high pressure, the hydrogen obtained in entered, after the evolutions in the turbines so thast in combination with atmosphetic air, produce usefulelectric energy, causing the condensation of the water vapor produced in the fuel cell to be able to convert that distilled water into drinking water by adding micronutrients and minerals, while the oxygen produced in the electrolyser, after interacting in oxygen expansion turbines and heat exchangers is directed to a carousel for filling high-pressure cylinders, suitable for distribution and marketing of already fractionated oxygen, while the condensed water from the fuel cell emissions is treated in equipment that adds micronutrients and minerals to make the distilled water potable out of the fuel cell, while the brackish or polluted water entering after an effective filtered process is pumped by a multi-stage extreme pressure pump, preferably positive displacement, in order to feed back the electrolyser.
